(19) Europäisches Patentamt
European Patent Office
Office européen des brevets

(11) **EP 4 455 088 A1**

(12) **EUROPÄISCHE PATENTANMELDUNG**

(43) Veröffentlichungstag:
**30.10.2024 Patentblatt 2024/44**

(21) Anmeldenummer: 23169933.1

(22) Anmeldetag: **25.04.2023**

(51) Internationale Patentklassifikation (IPC):
***C01B 32/19*** (2017.01)    ***C01B 32/194*** (2017.01)

(52) Gemeinsame Patentklassifikation (CPC):
**C01B 32/21; C01B 32/194;** C01P 2004/61

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: QWANTICA Holding GmbH
**32547 Bad Oeynhausen (DE)**

(72) Erfinder: **Van Hattum, Edgar**
**32547 Bad Oeynhausen (DE)**

(74) Vertreter: **Gebauer, Dieter Edmund**
**Splanemann Patentanwälte mbB**
**Rumfordstraße 7**
**80469 München (DE)**

(54) **VERFAHREN ZUR HERSTELLUNG EINES CHEMISCHEN PRODUKTS**

(57) Die Erfindung betrifft ein Verfahren zur Herstellung eines chemischen Produkts, welches die folgenden Schritte umfasst:

a) Bereitstellen einer Suspension von Partikeln in einem flüssigen Medium, enthaltend Graphit, Graphen und eine oder mehrere Säuren,

b) erstes mechanisches Zerkleinern der Partikel der Suspension,

c) Stehenlassen der Suspension bis sich ein flüssiger Überstand absetzt und zumindest teilweises Entfernen des flüssigen Überstands,

d) Zugeben von Glaspulver und einem oder mehreren Alkalisilikaten zur Suspension,

e) zweites mechanisches Zerkleinern der Partikel der Suspension.

FIG. 1

**Beschreibung**

Die Erfindung betrifft ein Verfahren zur Herstellung eines chemischen Produkts auf Basis von Graphit/Graphen und erstreckt sich weiterhin auf das durch ein solches Verfahren hergestellte chemische Produkt.

Graphit ist eine natürlich vorkommende, kristalline Erscheinungsform von Kohlenstoff, die eine Vielzahl von ebenen Schichten (Basalebenen) mit paralleler Anordnung umfasst. Jede Basalebene besteht aus kovalent verknüpften Sechsecken aus $sp^2$-hybridisierten Kohlenstoffatomen in einer bienenwabenförmigen Anordnung. Da Kohlenstoff vierwertig ist, liegen in jedem Sechseck zwei Doppelbindungen mit delokalisierten Elektronen vor (Benzolring). Durch delokalisierte Elektronen weist Graphit eine elektrische Leitfähigkeit in den Basalebenen auf, jedoch nicht senkrecht hierzu. Die Basalebenen stellen für sich eine weitere Erscheinungsform von Kohlenstoff mit zweidimensionaler Struktur dar, welche als "Graphen" bezeichnet wird. Gedanklich lässt sich durch eine Stapelung von Graphen-Schichten die dreidimensionale Struktur des Graphits erzeugen. Eine noch weitere Erscheinungsform von Kohlenstoff entsteht durch eine Hydrierung der Kohlenstoffatome von Graphen, welche als "Graphan" bezeichnet wird. In Graphan ist jedem Kohlenstoffatom ein Wasserstoffatom zugeordnet, das senkrecht zur Basalebene mit dem Kohlenstoffatom verbunden ist. Benachbarte Kohlenstoffatome weisen wechselweise oberhalb und unterhalb der Basalebene angeordnete Wasserstoffatome auf. Im Unterschied zu Graphit und Graphen, die beide elektrisch leitend sind, wird Graphan in der Fachwelt als halbleitendes Material angesehen, da sich durch den angebundenen Wasserstoff eine Energielücke in der Bandstruktur mit einer Breite von einigen Elektronenvolt öffnet.

Materialien auf Basis der verschiedenen Erscheinungsformen von Kohlenstoff verfügen über interessante und für technische Anwendungen vielversprechende Eigenschaften. Sie sind derzeit Gegenstand intensiver Forschungstätigkeit auf vielen technischen Gebieten. Lediglich beispielhaft sei auf den Ersatz von Silizium durch Graphen in Transistoren und die Nutzung von Graphan zur Wasserstoffspeicherung und in der Nanoelektronik hingewiesen.

Vor diesem Hintergrund besteht die Aufgabe der vorliegenden Erfindung darin, ein Verfahren zur Herstellung eines neuartigen, auf Graphit/Graphen basierenden chemischen Produkts mit elektrischer Leitfähigkeit zur Verfügung zu stellen, welches sehr vorteilhafte Eigenschaften für verschiedene praktische Anwendungen aufweist. Zudem soll das chemische Produkt in der großtechnischen bzw. industriellen Serienfertigung einfach und kostengünstig herzustellen sein.

Diese und weitere Aufgaben werden nach dem Vorschlag der Erfindung durch ein Verfahren zur Herstellung eines auf Graphit/Graphen basierenden chemischen Produkts, sowie durch das mit dem erfindungsgemäßen Verfahren hergestellte chemische Produkt mit den Merkmalen der nebengeordneten Patentansprüche gelöst. Vorteilhafte Ausgestaltungen der Erfindung ergeben sich aus den Unteransprüchen.

Erfindungsgemäß ist ein neuartiges Verfahren zur Herstellung eines neuartigen chemischen Produkts gezeigt. Das chemische Produkt basiert auf verschiedenen Erscheinungsformen von Kohlenstoff, wie eingangs beschrieben, sowie weiteren Bestandteilen, wobei das chemische Produkt durch seine chemische/physikalische Struktur im Zusammenwirken seiner Bestandteile seine besonderen Eigenschaften erlangt.

Im Folgenden wird das erfindungsgemäße Verfahren zur Herstellung des auf Graphit/Graphen basierenden chemischen Produkts beschrieben. Das Verfahren umfasst eine Reihe von Schritten, die vorzugsweise, jedoch nicht zwingend, in der angegebenen Reihenfolge der Schritte a) bis e) entsprechend der alphabetischen Abfolge ausgeführt werden.

Das erfindungsgemäße Verfahren umfasst einen Schritt a), bei dem eine Suspension von Partikeln in einem flüssigen Medium, vorzugsweise Wasser, besonders bevorzugt entionisiertes Wasser, enthaltend Graphit, Graphen und eine oder mehrere Säuren, bereitgestellt wird. In einer Ausführungsform der Erfindung enthält die in Schritt a) bereitgestellte Suspension zusätzlich einen oder mehrere Stabilisatoren, insbesondere gewählt aus ionischen und nicht-ionischen Tensiden (Detergenzien).

In Einklang mit der fachüblichen Verwendung, bezieht sich der Begriff "Suspension" auf ein heterogenes Stoffgemisch aus einer Flüssigkeit mit einem darin in Form von Partikeln (Körner) fein verteilten Feststoff. In der bereitgestellten Suspension handelt es sich bei den Feststoff-Partikeln um Graphit bzw. Graphen. Hier und im Weiteren bezieht sich der verwendete Begriff "Suspension" ohne weitere Spezifizierung auf die in Schritt a) bereitgestellte Suspension bzw. die durch Verfahrensschritte des erfindungsgemäßen Verfahrens hieraus gewonnene Suspension.

In einer Ausführungsform der Erfindung werden zum Bereitstellen der Suspension in Schritt a) Graphit und Graphen in Pulverform gemischt, wodurch eine pulverige Graphit/Graphen-Mischung erhalten wird. Vorteilhaft werden Graphit und Graphen solange gemischt, bis eine zumindest annähernd homogene Graphit/Graphen-Mischung vorliegt. Beispielsweise werden Graphit und Graphen in einer Rührvorrichtung, wie ein Blattrührwerk, (trocken) gemischt, beispielsweise für einen Zeitraum von ca. 30 Minuten. In einer Ausführungsform der Erfindung liegt der Zeitraum zum Mischen (z.B. Rühren) von Graphit und Graphen im Bereich von 10 Minuten bis 60 Minuten. Anschließend wird die pulverige Graphit/Graphen-Mischung in einem flüssigen Medium, vorzugsweise Wasser, besonders bevorzugt entionisiertes Wasser, suspendiert, wodurch eine Graphit/Graphen-Suspension erhalten wird.

In einer Ausführungsform der Erfindung liegt, bezogen auf die verwendete Gesamtmenge von Graphit und Graphen, ein relativer Gewichtsanteil von Graphit an der Gesamtmenge von Graphit und Graphen im Bereich von 60 bis 90 Gew.-%, wobei der Rest Graphen ist. Mit anderen Worten, der prozentuale Gewichtsanteil von Graphen an der Gesamtmenge von Graphit und Graphen (z.B. vorliegend als Graphit/Graphen-Mischung) liegt in entsprechender Weise im Bereich von 40 bis 10 Gew.-%, wobei sich die relativen Gewichtsanteile von Graphit und Graphen zu 100 Gew.-% ergänzen. Beispielsweise werden Graphit und Graphen in einem Verhältnis der relativen Gewichtsanteile von 2/3 Graphit und 1/3 Graphen gemischt.

In einer Ausführungsform der Erfindung liegt in Schritt a) zum Bereitstellen der Suspension das Verhältnis der relativen Gewichtsanteile der Gesamtmenge von Graphit und Graphen und des flüssigen Mediums der Suspension, insbesondere Wasser, im Bereich von 1:2 bis 1:3. Dies gilt insbesondere, wenn, wie vorstehend angegeben, eine pulverige Graphit/Graphen-Mischung in einem flüssigen Medium, vorzugsweise Wasser, besonders bevorzugt entionisiertes Wasser, suspendiert wird, wodurch eine Graphit/Graphen-Suspension erhalten wird. Mit anderen Worten, der relative Gewichtsanteil des flüssigen Mediums in der Suspension beträgt das 2 bis 3-fache des relativen Gewichtsanteils von Graphit und Graphen in der Suspension. Beispielsweise werden Graphit und Graphen in Pulverform in einer Rührvorrichtung, wie ein Balkenrührwerk, im flüssigen Medium suspendiert, beispielsweise für einen Zeitraum von ca. 120 Minuten. In einer Ausführungsform der Erfindung liegt der Zeitraum zum Suspendieren von Graphit und Graphen im flüssigen Medium im Bereich von 120 Minuten bis 480 Minuten.

In einer Ausführungsform der Erfindung wird Graphit ausschließlich in Form von Naturgraphit (d.h. natürlicher Graphit) verwendet. Naturgraphit wird im Handel von verschiedenen Herstellern unter der Angabe "Naturgraphit" vertrieben und ist typischerweise aufgereinigt. In einer Ausführungsform der Erfindung wird Graphit ausschließlich in Form von künstlichem (synthetischem) Graphit verwendet. Künstlicher Graphit wird im Handel von verschiedenen Herstellern unter der Angabe "künstlicher Graphit" oder "synthetischer Graphit" vertrieben. Naturgraphit und künstlicher Graphit werden typischerweise in Flockenform angeboten und unterscheiden sich in Form und Größe der Graphit-Flocken.

In einer Ausführungsform der Erfindung wird Graphit in einer Kombination von Naturgraphit und künstlichem Graphit verwendet, wobei, bezogen auf die Gesamtmenge von Graphit, ein relativer Gewichtsanteil von Naturgraphit an der Gesamtmenge von Graphit im Bereich von 60 bis 90 Gew.-% liegt und der Rest künstlicher Graphit ist. Mit anderen Worten, der prozentuale Gewichtsanteil von künstlichem Graphit am gesamten Graphit liegt in entsprechender Weise im Bereich von 40 bis 10 Gew.-%, wobei sich die relativen Gewichtsanteile von Naturgraphit und künstlichem Graphit zu 100 Gew.-% ergänzen. Beispielsweise werden Naturgraphit und künstlicher Graphit in einem Verhältnis der relativen Gewichtsanteile von 2/3 Naturgraphit und 1/3 künstlicher Graphit verwendet. In einer Ausführungsform der Erfindung werden Naturgraphit und künstlicher Graphit vor der weiteren Verwendung vermischt, was beispielsweise in einer Rührvorrichtung erfolgen kann.

Im Weiteren wird zwischen Naturgraphit und künstlichem Graphit nicht weiter unterschieden, sodass unter dem Begriff "Graphit" entweder Naturgraphit allein oder künstlicher Graphit allein oder aber eine Kombination aus Naturgraphit und künstlichem Graphit zu verstehen ist.

In einer Ausführungsform der Erfindung wird in Schritt a) zum Bereitstellen der Suspension eine säurehaltige Lösung, enthaltend eine oder mehrere Säuren hergestellt, wobei die säurehaltige Lösung mindestens eine Säure insbesondere in einem relativen Gewichtsanteil im Bereich von 5 bis 10 Gew.-% enthält. In einer Ausführungsform der Erfindung ist die Säure gewählt aus Ameisensäure und Essigsäure, sodass in der säurehaltigen Lösung Ameisensäure und/oder Essigsäure enthalten ist.

In einer Ausführungsform der Erfindung wird in Schritt a) zum Bereitstellen der Suspension eine stabilisatorhaltige Lösung, enthaltend einen oder mehrere Stabilisatoren hergestellt, welche insbesondere mit der säurehaltigen Lösung gemischt wird, wobei die stabilisatorhaltige Lösung mindestens einen Stabilisator insbesondere in einem relativen Gewichtsanteil im Bereich von 15 bis 30 Gew.-% enthält. In einer Ausführungsform der Erfindung handelt es bei dem mindestens einen Stabilisator um ein ionisches oder nicht-ionisches Tensid.

In einer Ausführungsform der Erfindung werden in Schritt a) zum Bereitstellen der Suspension eine säurehaltige Lösung und eine stabilisatorhaltige Lösung hergestellt, wobei das Verhältnis des relativen Volumenanteils der Suspension zur Summe der relativen Volumenanteile der säurehaltigen Lösung und der stabilisatorhaltigen Lösung im Bereich von 2:1 bis 1:1 liegt. Beispielsweise werden zu 4 Liter Suspension 1 Liter säurehaltige Lösung und 1 Liter stabilisatorhaltige Lösung (bzw. 2 Liter Säure/Stabilisator-Mischlösung) gegeben, was einem Verhältnis von 2:1 entspricht.

In einer Ausführungsform der Erfindung werden Graphit und Graphen in Pulverform gemischt und in einem flüssigen Medium, vorzugsweise Wasser, bevorzugt entionisiertes Wasser, suspendiert, sodass eine Graphit/Graphen-Suspension erhalten wird. Anschließend werden die säurehaltige Lösung und die stabilisatorhaltige Lösung zur Graphit/Graphen-Suspension gegeben, wobei die säurehaltige Lösung und die stabilisatorhaltige Lösung vor deren Zugabe zur Graphit/Graphen-Suspension gemischt werden können.

Das erfindungsgemäße Verfahren umfasst einen Schritt b), bei dem ein (erstes) mechanisches Zerkleinern der Partikel der Suspension erfolgt. Zum Zwecke der Unterscheidung von dem später durchgeführten Schritt e), bei dem gleichermaßen eine mechanische Zerkleinerung der Partikel erfolgt, werden die mechanische Zerkleinerung in Schritt b) als "erste" mechanische Zerkleinerung und die mechanische Zerkleinerung in Schritt e) als "zweite" mechanische Zerkleinerung bezeichnet.

In Schritt b) werden die Partikel der Suspension in einer Zerkleinerungsvorrichtung zerkleinert und gleichzeitig vermischt. In einer Ausführungsform der Erfindung werden die Partikel bis zu einer mittleren (durchschnittlichen) Partikelgröße bzw. Durchmesser (Korngröße, $d_{50}$) im Bereich von 6 bis 20 $\mu$m zerkleinert. Beispielsweise haben die Partikel eine mittlere Partikelgröße von ca. 12 $\mu$m. Die mittlere Partikelgröße von Partikeln in einer Suspension kann durch im Handel verfügbare Messgeräte mittels Standardverfahren lichtoptisch bestimmt werden, was fachbekannt ist.

Vorzugsweise handelt es sich bei der Zerkleinerungsvorrichtung um eine Rührwerkskugelmühle, die zur Nassvermahlung der Suspension geeignet ist. Rührwerkskugelmühlen sind fachbekannt. In Rührwerkskugelmühlen wird das Mahlgut vermischt und zerkleinert. In einer gängigen Bauweise weist eine Rührwerkskugelmühle eine Trommel auf, in der sich Kugeln als frei bewegliche Mahlkörper befinden. Durch Bewegen der Trommel werden die Kugeln in Bewegung versetzt, sodass das gleichermaßen in der Trommel befindliche Mahlgut durch Prall- und Scherkräfte zwischen den Kugeln zerkleinert wird. Die erzielte Feinheit wird, abhängig von der Mahldauer, wesentlich durch die Größe der Kugeln bestimmt, wobei das Mahlgut umso feiner vermahlen wird, je kleiner die Kugeln sind.

In einer Ausführungsform der Erfindung werden die Partikel der Suspension in der Zerkleinerungsvorrichtung, vorzugsweise Rührwerkskugelmühle, in einem Zeitraum von 20 Minuten bis 4 Stunden zerkleinert. In einer Ausführungsform der Erfindung wird die Suspension während der Zerkleinerung auf eine Temperatur im Bereich von 4 bis 22 °C aktiv gekühlt, da die beim Zerkleinern ablaufenden chemischen Reaktionen leicht exotherm sind.

Ohne an eine Theorie gebunden zu sein, wird derzeit angenommen, dass durch die säurehaltige Lösung sauerstoffhaltige Gruppen in den Partikeln der Suspension abgespalten werden, was durch ein ionisches oder nicht-ionisches Tensid als Stabilisator unterstützt wird. Zudem wird durch den Stabilisator einer Bildung von Klumpen aus den Partikeln in der Suspension entgegengewirkt.

Das erfindungsgemäße Verfahren umfasst einen Schritt c), bei dem die Suspension nach der Zerkleinerung in Schritt b) ohne aktive Bewegung der Suspension stehen gelassen wird, d.h. ruhend gestellt wird, bis sich ein flüssiger (wässriger) Überstand gegenüber einem festen Sediment absetzt, gefolgt von einem zumindest teilweisen, insbesondere vollständigen, Entfernen des flüssigen Überstands. Der flüssige Überstand wird vorzugsweise durch Abziehen entfernt. In einer Ausführungsform der Erfindung wird die Suspension für einen Zeitraum von 50 bis 480 Minuten, beispielsweise 2 Stunden, stehen gelassen. In einer Ausführungsform der Erfindung wird die Suspension solange stehen gelassen, dass mindestens 1/12 des Volumens der Suspension als wässriger Überstand entfernt werden kann.

Das erfindungsgemäße Verfahren umfasst einen Schritt d), bei dem Glaspulver (Glasmehl) und ein oder mehrere Alkalisilikate zur Suspension gegeben werden. Die Zugabe des Glaspulvers und des mindestens einen Alkalisilikats kann gleichzeitig oder nacheinander erfolgen.

Glaspulver ist im Wesentlichen wasserunlöslich und kann der Suspension in Pulverform oder in Form einer vorher hergestellten Glaspulver-Suspension zugegeben werden, wobei das Glaspulver insbesondere durch Suspendieren in einer Lösung des mindestens einen Alkalisilikats hergestellt werden kann.

In einer Ausführungsform der Erfindung weist das in Schritt d) zugegebene Glaspulver eine mittlere (durchschnittliche) Korngröße bzw. Durchmesser ($d_{50}$) der Körner im Bereich von 3 bis 20 $\mu$m, insbesondere im Bereich von 10 bis 15 $\mu$m, auf.

In einer Ausführungsform der Erfindung wird das in Schritt d) zugegebene Glaspulver in einer solchen Menge zur Suspension zugegeben, dass es einen relativen Gewichtsanteil von 2 bis 10 Gew.-% pro kg Suspension, insbesondere 2,5 bis 7,5 Gew.-% pro kg Suspension, hat.

In einer Ausführungsform der Erfindung ist das in Schritt d) zugegebene Glaspulver aus Borsilikatglas hergestellt.

Glaspulver ist im Handel von verschiedenen Anbietern erhältlich.

In einer Ausführungsform der Erfindung wird vor, in oder nach Schritt d) zum wahlfreien Einstellen der Konsistenz der Suspension der Gehalt an flüssigem Medium, insbesondere Wassergehalt, der Suspension erhöht. Vorzugsweise wird zu diesem Zweck als flüssiges Medium Wasser, bevorzugt entionisiertes Wasser, zur Suspension gegeben. In einer Ausführungsform der Erfindung beträgt der relative Volumenanteil der zugeführten flüssigen Mediums 30 bis 100 Vol.-%, insbesondere 30 bis 90 Vol.-%, bezogen auf das Volumen der Suspension. Die Menge an zugeführtem flüssigem Medium hängt von der gewünschten Konsistenz des chemischen Produkts ab, die wahlfrei, je nach gewünschter Anwendung, fest, pastös, pastös-flüssig oder flüssig sein kann, wobei der relative Volumenanteil des zugeführten flüssigen Mediums beispielsweise 45 Vol.-% beträgt, wenn das chemische Produkt eine eher pastöse Konsistenz aufweisen soll, und beispielsweise 75 Vol.-% beträgt, wenn das chemische Produkt eine eher flüssige Konsistenz aufweisen soll.

In einer Ausführungsform der Erfindung wird zur Erhöhung des Wassergehalts der Suspension in Schritt d) mindestens ein Alkalisilikat in einer vorzugsweise wässrigen Lösung der Suspension zugegeben, d.h. es wird eine alkalisilikathaltige Lösung hergestellt.

Die in der Erfindung verwendeten Alkalisilikate sind wasserlösliche Alkalisilikate der allgemeinen Formel $Me_2O$ n $SiO_2$, worin Me Natrium, Kalium oder Lithium und n einen Zahlenwert zwischen 1 und 4 bedeutet. In einer Ausführungsform der Erfindung werden Natriumwasserglas und/oder Kaliumwasserglas zur Suspension gegeben. In einer Ausführungsform der Erfindung werden flüssiges Natriumwasserglas und/oder flüssiges Kaliumwasserglas zur Suspension gegeben, wobei als Lösungsmittel für das Natriumwasserglas und/oder Kaliumwasserglas vorzugsweise Wasser, bevorzugt entionisiertes Wasser, verwendet wird. In einer Ausführungsform der Erfindung wird ausschließlich Natriumwasserglas, insbesondere flüssiges Natriumwasserglas, zur Suspension gegeben. In einer Ausführungsform der Erfindung wird ausschließlich Kaliumwasserglas, insbesondere flüssiges Kaliumwasserglas, zur Suspension gegeben. In einer Ausführungsform der Erfindung wird eine Kombination von Natriumwasserglas, insbesondere flüssiges Natriumwasserglas, und Kaliumwasserglas, insbesondere flüssiges Kaliumwasserglas, zur Suspension gegeben.

Natriumwasserglas (Sodawasserglas) ist fachbekannt und im Handel von verschiedenen Anbietern erhältlich. Natriumwasserglas enthält Natriumsilikat ($Na_2SiO_3$), welches in Wasser zu $Na^+$ - Ionen und $SiO_3^{2-}$ - Ionen dissoziiert. Kaliumwasserglas (Kaliwasserglas) ist gleichermaßen fachbekannt und im Handel erhältlich. Kaliumwasserglas enthält Kaliumsilikat, welches in Wasser zu K+ - Ionen und $SiO_4^{4-}$ - Ionen dissoziiert. Silizium(Si)-haltige Ionen aus dem verwendeten Alkalisilikat, insbesondere $SiO_3^{2-}$ - Ionen und $SiO_4^{4-}$ - Ionen, werden im Weiteren der Einfachheit halber als "Silikat-Ionen" bezeichnet.

In einer Ausführungsform der Erfindung beträgt der relative Gewichtsanteil des einen oder der mehreren Alkalisilikate in Summe 2 bis 8 Gew.-%, insbesondere 2 bis 6 Gew.-%, beispielsweise 5 Gew.-%, bezogen auf die Suspension. Bezogen auf die zugeführte alkalisilikathaltige Lösung beträgt der relative Gewichtsanteil des einen oder der mehreren Alkalisilikate in Summe 20 bis 60 Gew.-%, insbesondere 20 bis 40 Gew.-%, insbesondere 30 bis 40 Gew.-%, beispielsweise 30 Gew.-%. Werden beispielsweise 30 Gew.-% Alkalisilikat zugeführt, besteht der Rest der Lösung aus dem flüssigen Medium, vorzugsweise Wasser, (d.h. 70 Gew.-%).

Das erfindungsgemäße Verfahren umfasst einen Schritt e), bei dem die Partikel der Suspension in einer Zerkleinerungsvorrichtung einem weiteren (zweiten) mechanischen Zerkleinern unterzogen werden. Da die Partikel der Suspension - selbst bei Verwendung eines Stabilisators - zur Klumpenbildung neigen, ist die zweite mechanische Zerkleinerung erforderlich.

In Schritt e) werden die Partikel der Suspension in einer Zerkleinerungsvorrichtung zerkleinert und gleichzeitig vermischt. In einer Ausführungsform der Erfindung werden die Partikel bis zu einer mittleren (durchschnittlichen) Partikelgröße bzw. Durchmesser (Korngröße, $d_{50}$) im Bereich von 6 bis 20 $\mu$m zerkleinert. Vorzugsweise handelt es sich bei der Zerkleinerungsvorrichtung um eine Rührwerkskugelmühle, die zur Nassvermahlung der Suspension geeignet ist.

In einer Ausführungsform der Erfindung werden die Partikel der Suspension in der Zerkleinerungsvorrichtung, vorzugsweise Rührwerkskugelmühle, in einem Zeitraum von 3 bis 8 Stunden, insbesondere 4 bis 5 Stunden, zerkleinert. In einer Ausführungsform der Erfindung wird die Suspension während der Zerkleinerung auf eine Temperatur im Bereich von 4 bis 22 °C aktiv gekühlt, da die hierbei ablaufenden chemischen Reaktionen leicht exotherm sind.

Ohne an eine Theorie gebunden zu sein, wird derzeit angenommen, dass während der mechanischen Bearbeitung der Partikel in Schritt e) aus Graphen die Erscheinungsform Graphan entsteht, und dass bei einem fortwährenden mechanischen Brechen der Schichten von Graphit und Graphen bei der mechanischen Bearbeitung eine Interkalation von Silikat-Ionen und Körnern des Glaspulvers in die Schichten von Graphit und Graphen erfolgt. Zudem erfolgt durch das Glaspulver eine "Verglasung" der Oberfläche der Partikel der Suspension. Dies hat wesentlichen Einfluss auf die besonderen physikalischen und chemischen Eigenschaften des chemischen Produkts.

Gemäß einer Ausführungsform der Erfindung wird die in Schritt e) erhaltene Suspension unter zumindest zeitweiligem Bewegen, insbesondere durch Rühren, gelagert, insbesondere für einen Zeitraum von 1 bis 3 Wochen, wobei die Suspension vor oder nach Lagerung das durch das erfindungsgemäße Verfahren hergestellte chemische Produkt darstellt. Während der Lagerung der Suspension können chemische Reaktionen in fortgesetzter Weise stattfinden. Durch das Rühren der Suspension kann einem unerwünschten Absetzen fester Bestandteile der Suspension entgegen gewirkt werden.

In einer Ausführungsform der Erfindung wird die Suspension vor Schritt c) einer Behandlung durch Ultraschall zur Verminderung der mittleren Partikelgröße unterzogen. Entsprechende Vorrichtungen mit Ultraschallgeber, die in die Suspension eingetaucht werden können, sind fachbekannt, sodass hier nicht näher darauf eingegangen werden muss. Durch die mechanische Krafteinwirkung mittels Ultraschalls kann die durchschnittliche Partikelgröße der Partikel der Suspension verringert werden.

In einer Ausführungsform der Erfindung wird die Suspension nach Schritt e) einer Behandlung durch Hochdruckhomogenisation zum Homogenisieren der mittleren Partikelgröße der Partikel unterzogen. Entsprechende Vorrichtungen zur Hochdruckhomogenisation sind fachbekannt, sodass hier nicht näher darauf eingegangen werden muss.

In einer Ausführungsform der Erfindung wird die Suspension nach Schritt e), insbesondere nach Lagerung, einer Zentrifugation unterzogen, wodurch ein Feststoff gewonnen werden kann. Auf diese Weise kann das chemische Produkt, ggf. nach Trocknen, als Feststoff (z.B. in Form eines Pulvers) gelagert und/oder weiterverwendet werden.

Die Erfindung erstreckt sich weiterhin auf das durch das erfindungsgemäße Verfahren erhaltene chemische Produkt. Vorstehende Ausführungen zum erfindungsgemäßen Verfahren beziehen sich in analoger Weise auf das erfindungsgemäße chemische Produkt.

Die verschiedenen Ausführungsformen der Erfindung können einzeln oder in beliebigen Kombinationen realisiert sein.

Die Erfindung wird nachfolgend anhand von Ausführungsbeispielen näher erläutert, wobei Bezug auf die beigefügte Figuren genommen wird. Diese zeigen:

Fig. 1     eine schematische Aufsicht auf einen Flächenheizkörper,
Fig. 2     eine Querschnittsansicht durch den Flächenheizkörper von Figur 1 gemäß Schnittlinie X-X,
Fig. 3     eine Messanordnung zum Messen des Strahlungswirkungsgrads des Flächenheizkörpers von Figur 1,
Fig. 4     eine Thermographieaufnahme von fünf Flächenheizkörpern,
Fig. 5     ein Ablaufdiagramm zur Veranschaulichung des erfindungsgemäßen Verfahrens.

In einer Ausführungsform des erfindungsgemäßen Verfahrens werden Graphit und Graphen in Pulverform gemischt, wodurch eine pulverige Graphit/Graphen-Mischung erhalten wird, die in entionisiertem Wasser suspendiert wird, wodurch eine Graphit/Graphen-Suspension erhalten wird. Die pulverige Graphit/Graphen-Mischung wird in einem Rührwerk vermischt. Bezogen auf die Gesamtmenge von Graphit und Graphen liegt ein relativer Gewichtsanteil von Graphit an der Gesamtmenge von Graphit und Graphen im Bereich von 60 bis 90 Gew.-%, wobei der Rest Graphen ist. Graphit wird in einer Kombination von Naturgraphit und künstlichem Graphit verwendet, wobei, bezogen auf die Gesamtmenge von Graphit, ein relativer Gewichtsanteil von Naturgraphit an der Gesamtmenge von Graphit im Bereich von 60 bis 90 Gew.-% liegt und der Rest künstlicher Graphit ist. Der relative Gewichtsanteil der Gesamtmenge von Graphit und Graphen zu Wasser liegt im Bereich von 1:2 bis 1:3.

Es wird eine säurehaltige (wässrige) Lösung mindestens einer Säure, vorzugsweise Essigsäure und/oder Ameisensäure, hergestellt, wobei die säurehaltige Lösung die mindestens eine Säure in einem relativen Gewichtsanteil im Bereich von 5 bis 10 Gew.-% enthält. Weiterhin wird eine stabilisatorhaltige Lösung mit mindestens einem Stabilisator, vorzugsweise einem ionischen oder nicht-ionischen Tensid, hergestellt, wobei die stabilisatorhaltige Lösung den mindestens einen Stabilisator in einem relativen Gewichtsanteil im Bereich von 15 bis 30 Gew.-% enthält.

Die säurehaltige Lösung und die stabilisatorhaltige Lösung werden vorzugsweise gemischt, und zur Graphit/Graphen-Suspension gegeben, wobei das Verhältnis des relativen Volumenanteils der Suspension zur Summe der relativen Volumenanteile der säurehaltigen Lösung und der stabilisatorhaltigen Lösung im Bereich von 2:1 bis 1:1 liegt.

Anschließend wird die gewonnene Suspension in eine Rührwerkskugelmühle gegeben, wo die Partikel der Suspension in einem Zeitraum von 20 Minuten bis 4 Stunden mechanisch zerkleinert werden, bis die Partikel der Suspension eine mittlere Partikelgröße im Bereich von 6 bis 20 μm aufweisen. Die Suspension wird während des mechanischen Zerkleinerns aktiv gekühlt.

Anschließend wird die Suspension optional einer Behandlung durch Ultraschall zur Verminderung einer mittleren Partikelgröße unterzogen.

Anschließend wird Glaspulver mit einer mittleren Korngröße im Bereich von 3 bis 20 μm in einer solchen Menge zur Suspension gegeben, dass es einen relativen Gewichtsanteil von 2 bis 10 Gew.-% pro kg Suspension hat. Vorzugsweise ist das Glaspulver aus Borsilikatglas hergestellt.

Es wird eine alkalisilikathaltige Lösung hergestellt, die vorzugsweise Kaliumwasserglas und/oder Natriumwasserglas enthält. Der relative Gewichtsanteil des mindestens einen Alkalisilikats beträgt in Summe 2 bis 8 Gew.-%, bezogen auf die Suspension. Bezogen auf die wässrige Lösung beträgt der relative Gewichtsanteil des mindestens einen Alkalisilikats 20 bis 60 Gew.-%. Hierdurch kann auch eine Erhöhung des Wassergehalts der Suspension erreicht werden.

Anschließend wird die gewonnene Suspension in einer Rührwerkskugelmühle in einem Zeitraum von 3 bis 8 Stunden mechanisch zerkleinert, bis die Partikel der Suspension eine mittlere Partikelgröße im Bereich von 6 bis 20 μm aufweisen. Die Suspension wird während des mechanischen Zerkleinerns aktiv gekühlt.

Anschließend wird die Suspension optional einer Behandlung durch Hochdruckhomogenisation zum Homogenisieren der mittleren Partikelgröße unterzogen.

Anschließend wird die Suspension unter zumindest zeitweiligem Bewegen, insbesondere durch Rühren, für einen Zeitraum von 1 bis 3 Wochen gelagert. Optional wird die Suspension anschließend zentrifugiert.

Beispiel

Verwendete Materialien:

- synthetischer Graphit (GSI 70, RMC Remacon, Deutschland: Dichte $\rho G = 2{,}02$ g · cm$^{-3}$, Median Partikelgröße dx50,3 = 15 - 20 μm)
- Naturgraphit (GNP6 (RMC Remacon, Deutschland: Dichte $\rho G = 2{,}02$ g · cm$^{-3}$, Median Partikelgröße d50,3 = 3,5 μm)
- deionisiertes Wasser, Reinstwasser (Merck, Deutschland)
- oxo-Graphen-Derivat (RMC Remacon, Deutschland)

- Trifluoressigsäure (Reinheit ≥99.9 %, Carl Roth, Deutschland)
- Kaliumwasserglas (BASF)
- Natriumwasserglas (BASF)
- TWEEN 80, TWEEN 85 (VWR, Deutschland)
- Glaspulver (Glashütte)

Es wurden 1 kg synthetischer Graphit und 400 g oxo-Graphenderivat in einem Balkenrührwerk vermischt. Die so erhaltene Graphit/Graphen-Mischung wurde in ein Rührwerk oder einen Extruder gegeben. Hinzugefügt wurden 1 L entionisiertes Wasser. Durch Rühren für einen Zeitraum von 120 min wurde die Graphit/Graphen-Mischung in Wasser suspendiert, wodurch eine Graphit/Graphen-Suspension erhalten wurde. 20 g TWEEN 80/85 wurden in 0,2 L Wasser gelöst, wodurch eine stabilisatorhaltige Lösung erhalten wurde. 10 g Trifluoressigsäure wurden in 0,2 L Wasser gelöst, wodurch eine säurehaltige Lösung erhalten wurde. Die stabilisatorhaltige Lösung und die säurehaltige Lösung wurden vermischt, wodurch eine Mischlösung erhalten wurde. 0,42 - 0,43 L der Mischlösung wurden zur Graphit/Graphen-Suspension gegeben.

Die so erhaltende Suspension wurde in eine Rührwerkskugelmühle (PE075, Netzsch, Deutschland) gegeben und für eine Zeitraum von 90 min zerkleinert. Als Mahlkörper wurden Y-stabilisierte Zirkonoxid-Kugeln (95 % $ZrO_2$ + 5 % $Y_2O_3$) mit den Durchmessern dMK,YZ 30, 50, 100 $\mu$m (Tosho, Japan) und der Dichte $\rho$MK, YZ = 6,0 g • mL-1 verwendet. Des Weiteren wurden Polystyrol-Kugeln mit dem Durchmesser dMK,PS = 250 $\mu$m und der Dichte $\rho$MK,PS = 1,2 g • mL-1 (Norstone, USA) verwendet. Als kühlbarer Mahlbehälter wurde ein Keramik-Mahlraum mit einem Fassungsvermögen von 0,6 L benutzt. Während des Zerkleinerns erfolgte eine Kühlung des Mahlraumes auf 15 °C. Als Rührer wurde ein Scheibenrührer aus Siliziumcarbid mit drei exzentrisch angebrachten perforierten Scheiben (Radius = 3,1 cm) verwendet.

Die Suspension wurde einer Ultraschallbehandlung unterzogen. Hierfür wurde eine Ultraschall-Sonotrode (UP 200s, Hielscher - Ultrasound Technology, Deutschland) verwendet. Die Suspension wurde 1 Stunde bei 120 W bei einem Verhältnis von Pulsdauer/Ruhezeit von 1,4 und einer Eintauchtiefe der Ultraschallsonde von ca. 1 cm beschallt. Um ein Aufheizen der Probe zu verhindern, wurde sie in ein Wasserbad bei < 20°C eingetaucht.

Die Suspension wurde anschließend ruhend gestellt für einen Zeitraum von 240 min, sodass sich ein wässriger Überstand absetzen konnte. Anschließend wurde der Überstand (Menge ca. 0,1 L) mit einem Stababsauger abgezogen.

Es wurde eine Lösung von Natriumwasserglas und Kaliwasserglas hergestellt. Hierzu wurden 20 g Natriumwasserglas und 40 g Kaliwasserglas in 2 L Wasser gelöst. 2,6 L der erhaltenen Lösung wurden in die Suspension gegeben. Zudem wurden 10 g des Glaspulvers zur Suspension gegeben.

Die so erhaltende Suspension wurde in eine Rührwerkskugelmühle (PE075, Netzsch, Deutschland) gegeben und für eine Zeitraum von 120 min zerkleinert. Als Mahlkörper wurden Y-stabilisierte Zirkonoxid-Kugeln (95 % $ZrO_2$ + 5 % $Y_2O_3$) mit den Durchmessern dMK,YZ 30, 50, 100 $\mu$m (Tosho, Japan) und der Dichte $\rho$MK, YZ = 6,0 g • mL-1 verwendet. Des Weiteren wurden Polystyrol-Kugeln mit dem Durchmesser dMK,PS = 250 $\mu$m und der Dichte $\rho$MK,PS = 1,2 g • mL-1 (Norstone, USA) verwendet.

Anschließend erfolgt eine Homogenisierung der Suspension (Hochdruckhomogenisator OmegaR60, Netzsch, Deutschland). Hierfür wurde eine Düse N8 verwendet (Durchmesser ca. 240 $\mu$m). Der Gesamtdruck konnte über den Volumenstrom und das veränderliche Spaltmaß eines Gegendruckventils eingestellt werden. Der Volumenstrom war von 18 - 60 L • h-1 stufenlos regelbar und der Spalt konnte durch einen Schraubverschluss ebenfalls stufenlos angepasst werden. Der eingestellte Gesamtdruck lag zwischen 100-700 bar. Zur Einstellung des Drucks am Gegendruckventil wurde dieses zuerst komplett geöffnet und der gewünschte Druck an der Düse durch die Regulierung des Volumenstromes eingestellt. Im Anschluss wurde der Spalt solange reduziert, bis der gewünschte Gesamtdruck erhalten wurde.

Anschließend wurde die Suspension für einen Zeitraum von drei bis vier Wochen gelagert, wobei die Suspension zeitweilig gerührt wurde. Hierfür wurde z.B. ein Stabrührer eingesetzt.

Das durch das erfindungsgemäße Verfahren hergestellte chemische Produkt ist elektrisch leitfähig, wobei sich die elektrische Leitfähigkeit wesentlich durch Graphit und Graphen ergibt. Die elektrische Leitfähigkeit des chemischen Produktes liegt im Bereich von $1 \times 10^8$ S/m bis $1 \times 10^9$ S/m. Die Wärmeleitfähigkeit des chemischen Produkts liegt im Bereich von 18,0 bis 48,5 W/(m · K), wobei eine bevorzugte Wärmeleitfähigkeit im Bereich von 18,0 bis 40 W/(m · K) liegt und insbesondere 20 W/(m · K) beträgt.

Ohne an eine Theorie gebunden zu sein, wir derzeit davon ausgegangen, dass das chemische Produkt eine amorphe Struktur aufweist. Während der Herstellung wandern Glaspartikel und Silikat-Ionen in "Löcher" der dreidimensionalen Struktur aus Kohlenstoffatomen ein. Es scheint, dass die Silikat-Ionen des chemischen Produkts durch externe Stimulantien, wie elektrischer Strom, statische magnetische Felder oder elektromagnetische Felder, zu Schwingungen angeregt werden können, was mit der Erzeugung und Abgabe von IR-Strahlung, insbesondere im Frequenzbereich von 5,2 $\mu$m bis 12 $\mu$m, verbunden ist. Mithin weist das chemische Produkt sehr vorteilhafte und teilweise noch nicht verstandene Eigenschaften im Zusammenhang mit elektromagnetischen Wechselfeldern sowie statischen elektrischen und statischen magnetischen Feldern auf. So kann durch Anlegen einer elektrischen Spannung an das chemische Produkt und dem hierdurch bewirkten Stromfluss durch das chemische Produkt ein elektromagnetisches Wechselfeld im infraroten Wellenlängenbereich erzeugt werden, das als Infrarotstrahlung (z.B. Infrarot C) vom chemischen Produkt abgestrahlt wird und sehr vorteilhaft zu Heizzwecken in Form von Strahlungsheizung eingesetzt werden kann.

Das chemische Produkt kann somit in vorteilhafter Weise zur Erzeugung von Infrarotstrahlung und somit zur Strahlungsheizung mittels Infrarotstrahlung eingesetzt werden, beispielsweise in einem Flächenheizkörper, wobei es genügt, ein aktiv zu heizendes Material in freier Sicht zum chemischen Produkt anzuordnen.

Denkbar und möglich ist auch, eine innere Heizung in einem Volumenkörper, z.B. aus Beton, zu realisieren, indem das z.B. mit einer elektrischen Spannung zu beaufschlagende chemische Produkt zumindest teilweise im Innern des Volumenkörpers angeordnet wird. Die vom chemischen Produkt erzeugte Infrarotstrahlung kann somit beispielsweise sehr vorteilhaft zum aktiven Trocknen des Innenbereichs eines Volumenkörpers mittels Strahlungsheizung eingesetzt werden.

Bei seiner Anwendung zum aktiven Heizen mittels Strahlungsheizung z.B. durch Beaufschlagen mit einer elektrischen Spannung erwärmt sich das chemische Produkt nur geringfügig, jedenfalls nicht so stark, dass Verbrennungen an menschlicher oder tierischer Haut zu befürchten sind. Jedenfalls dient das chemische Produkt nicht vorrangig zur elektrischen Widerstandsheizung. Dies ist ein weiterer wichtiger Vorteil der Erfindung.

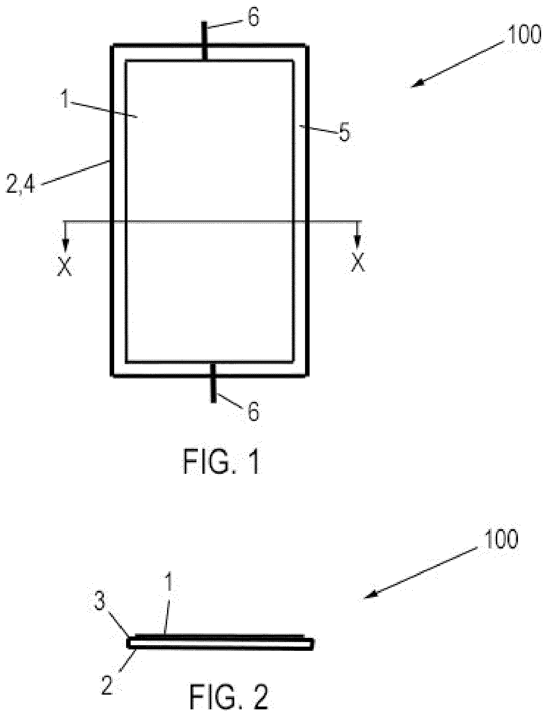

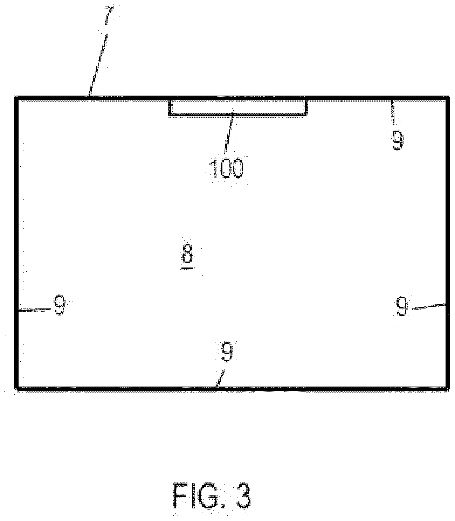

Es wird nun Bezug auf die Figuren 1 bis 3 genommen, worin ein Flächenheizkörper in Aufsicht (Figur 1) und in einer Querschnittansicht (Figur 2) gemäß Schnittlinie X-X, sowie eine Messanordnung (Figur 3) zum Messen der infrarotstrahlenden Eigenschaft (Strahlungswirkungsgrad) des Flächenheizkörpers mit einem gemäß dem obigen Beispiel des erfindungsgemäßen Verfahrens hergestellten chemischen Erzeugnis in schematischer Weise veranschaulicht ist.

Seien zunächst die Figuren 1 und 2 betrachtet, worin ein insgesamt mit der Bezugszahl 100 bezeichneter Flächenheizkörper dargestellt ist. Für die Herstellung des Flächenheizkörpers 100 wurde das chemische Erzeugnis 1 in pastöser Form erzeugt und auf ein plattenförmiges Substrat 2 aus einem elektrisch isolierenden Material, beispielsweise Glas oder Kunststoff, mit hier beispielsweise rechteckiger Form aufgebracht. Hierbei wurde das chemische Erzeugnis 1 auf eine (Haupt-)Oberfläche 3 des Substrats 2 flächig verteilt aufgebracht, wobei das chemische Erzeugnis 1 die Oberfläche 3 des Substrats 2 mit zumindest annähernd homogener Schichtdicke bis auf einen, an einen umlaufenden Rand 4 des Substrats 2 angrenzenden, Randstreifen 5 vollflächig bedeckte. Es versteht sich, dass sich das chemische Erzeugnis auch bis zum Rand 4 des Substrats 2 erstrecken kann. Durch Austrocknen wurde das zunächst streichfähige (pastöse) chemische Erzeugnis 1 hart. Auf einander gegenüberliegenden Seiten des Substrats 2 wurden im Bereich des Randstreifens 5 zwei Elektroden 6 in elektrischem Kontakt mit dem chemischen Erzeugnis 1 angeordnet, sodass eine Beaufschlagung des Flächenheizkörpers 100 mit einer elektrischen Spannung und ein Stromfluss durch das elektrisch leitfähige chemische Erzeugnis 1 parallel zur Oberfläche 3 des Substrats 2 zwischen den beiden Elektroden 6 ermöglicht ist.

Die Abmessungen des Substrats 2 des Flächenheizkörpers 100 waren hier beispielsweise wie folgt: Länge 100 cm, Breite 30 cm, Dicke 1 cm. Die Schichtdicke des aufgetragenen pastösen chemischen Erzeugnisses betrug hier beispielsweise ca. 0,5 cm.

Der Flächenheizkörper 100 wurde in die in Figur 3 gezeigte Messanordnung eingebracht. Die Messanordnung umfasste eine sogenannten Klimakammer 7, d.h. eine abgeschlossene Umhausung mit einem Innenraum 8, der von temperierbaren Umgebungsflächen 9 umgrenzt ist. Die Innenabmessungen der Klimakammer 7 betrugen Breite $\times$ Länge $\times$ Höhe = $(4 \times 5 \times 2,5)$ m$^3$. Die Umgebungsflächen 9 konnten im Temperaturbereich 5 bis 50 °C eingestellt werden. Die Temperatur im Innenraum 8 konnte im Bereich von 10 bis 35 °C eingestellt werden.

Der Flächenheizkörper 100 wurde an der Decke des Klimaraums 7 angebracht, hier beispielsweise mittels einer Magnethalterung. Die Oberflächentemperatur der raumzugewandten Seite des Flächenheizkörpers 100 wurde mit einer Thermokamera der Fa. Infratec GmbH, Typ Variocam HD, gemessen. Die elektrische Leistung, Spannung und Stromstärke wurden mit dem Messumformer SICAM der Fa. Siemens ermittelt. Zur Bestimmung des Emissionsgrads der raumzugewandten Seite des Flächenheizkörpers 100 kamen ein NTC-Temperatursensor und ein PT100-Temperatursensor zum Einsatz.

Der messtechnische Aufbau wurde gemäß der Norm DIN EN IEC 60675-3 umgesetzt, wobei der Klimaraum mit den Abmessungen L $\times$ B $\times$ H = 5 m $\times$ 4 m $\times$ 2,5 m von dem in der Norm DIN EN IEC 60675-3 definierten Prüfraum nach DIN EN 442-2 (L $\times$ B $\times$ H = 4 m $\times$ 4 m $\times$ 3 m) abwich. Dieser Unterschied hatte auf die physikalischen Effekte zur Bestimmung des Strahlungs-wirkungsgrads keinen signifikanten Einfluss.

Die Umgebungsflächen 9 des Klimakammer 7 wurden auf eine Temperatur von 20 °C (Toleranzbereich von $\pm$ 0,5 K) eingestellt. Der Emissionsgrad des Bodens betrug 0,96, der Emissionsgrad der Wände und der Decke betrug 0,94.

Mittels eines Stelltransformators wurden unterschiedliche Betriebsspannungen in Höhe von 12V, 18V, 24V und 36V eingestellt.

Zur Bestimmung des Strahlungswirkungsgrads des Flächenheizkörpers 100 wurde folgende Infrarotkamera verwendet: Infratec GmbH, Variocam HD, Auflösung: 640 $\times$ 480 Pixel, Genauigkeit: $\pm$ 1,5 K.

Die zur Messung verwendeten Sensoren und deren Toleranzen sind der nachfolgenden Tabelle 1 zu entnehmen:

Tabelle 1

| Bezeichnung | Typ | Genauigkeit |
|---|---|---|
| Temperatursensor | PT100 | ±(0,3K+0,005·ϑ)K |
| Temperatursensor | NTC | ±0,2K |
| Elektr. Leistungsmessung | SICAM | ±(0,2 % vom Messwert) |
| Thermographiekamera | Variocam HD | ±1,5K |

Die Bestimmung des Strahlungswirkungsgrads erfolgte auf Grundlage der Norm DIN EN IEC 60675-3. Diese definiert den Strahlungswirkungsgrad als Verhältnis zwischen Wärmestrom durch Strahlungsaustausch einer aktiven Strahlungsheizfläche und Innenflächen des Prüfraumes zur aufgebrachten elektrischen Leistung im Beharrungszustand. Siehe nachfolgende Gleichung 1:

$$\eta_{Str} = \Phi_{rad} / P_{el} \qquad \text{(Gleichung 1)}$$

Der Strahlungswärmestrom kann mittels nachfolgender Gleichung 2 berechnet werden:

$$\Phi_{rad} = \sigma \cdot \varepsilon_h \cdot A_{front} \cdot (T^4_{front} - T^4_W) \qquad \text{(Gleichung 2)}$$

In den durchgeführten Messungen wurden folgende Größen für Gleichung 1 und Gleichung 2 bestimmt:

- Emissionsgrad $\varepsilon_h$
- Oberflächentemperatur $T_{front}$ im Beharrungszustand
- Elektrische Leistung $P_{el}$ im Beharrungszustand

Die Ermittlung des Emissionsgrades erfolgte wie in der Norm DIN EN IEC 60675-3 beschrieben mit Hilfe des Temperaturreferenzverfahrens und des Abdeckband-Referenzverfahrens.

Die absolute Fehlerangabe des Strahlungswirkungsgrads basierte auf dem Fehlerfortpflanzungsgesetz für den maximalen Fehler unter Berücksichtigung der Messabweichungen der einzelnen Messgrößen.

Es wurden fünf Flächenheizkörper 100 in die Klimakammer 7 eingebracht, was in der schematischen Darstellung von Figur 3 nicht dargestellt ist. Für die Prüfung wurden alle Umgebungsflächen 9 außer der Decke konstant auf 20°C gehalten. Die Analyse erfolgte ausschließlich für die mit dem chemischen Erzeugnis versehenen Flächenteile der fünf Flächenheizkörper 100. Die mittlere Oberflächentemperatur im Beharrungszustand ist eine flächenmäßige gemittelte Temperatur über diese fünf Flächenheizkörper.

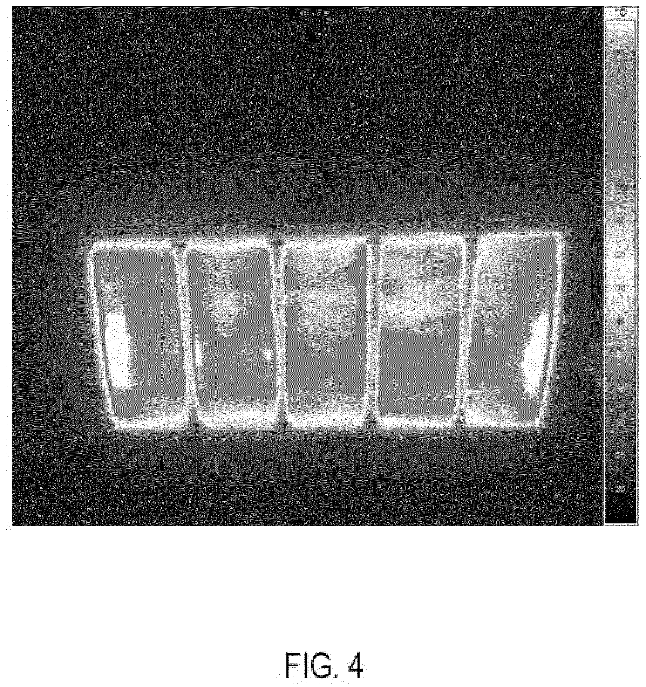

In Figur 4 ist eine Thermographieaufnahme der fünf Flächenheizkörper 100 bei einer Betriebsspannung von 36 V im Beharrungszustand gezeigt. Es sind Unterschiede in der Oberflächentemperatur über die fünf Teilflächen erkennbar. Der ermittelte Emissionsgrad der Flächen mit dem chemischen Erzeugnis betrug 0,95.

In der nachfolgenden Tabelle 2 sind die ermittelten Ergebnisse bei der genannten Variation der Betriebsspannung zusammengefasst:

Tabelle 2

| Variation Spannung in V | | 12 | 18 | 24 | 36 |
|---|---|---|---|---|---|
| mittlere elektrische Leistung $P_{el}$ | in W | 36,29 | 87,01 | 163,65 | 350,85 |
| mittlere elektrische Spannung $U_{el}$ | in V | 11,82 | 17,93 | 23,90 | 36,26 |
| mittlere elektrische Stromstärke $I_{el}$ | in A | 3,06 | 4,78 | 6,85 | 9,70 |
| Oberflächentemperatur $T_{front}$ | in °C | 26,2 | 34,5 | 45,9 | 69,7 |
| Wärmestrom durch Strahlung $\Phi_{rad}$ | in W | 18,76 | 45,76 | 86,58 | 187,14 |

(fortgesetzt)

| Variation Spannung in V | | 12 | 18 | 24 | 36 |
|---|---|---|---|---|---|
| Strahlungswirkungsgrad $\eta_{Str}$ | in % | 51,7 | 52,6 | 52,9 | 53,3 |
| Absoluter Messfehler $\Delta\eta_{Str}$ | in % | 17,8 | 8,5 | 5,3 | 3,4 |

Es ist erkennbar, dass mit steigender Betriebsspannung die mittlere elektrische Leistung und die Oberflächentemperatur im Beharrungszustand steigt. Da der Anstieg der elektrischen Leistung nicht proportional zum Anstieg des Wärmestroms durch Strahlung ist, steigt der Strahlungswirkungsgrad mit zunehmender Betriebsspannung. Je geringer die Oberflächentemperatur im Beharrungszustand ist, umso stärker wirkt sich der Messfehler der Temperarturmessung auf den absoluten Messfehler des Strahlungswirkungsgrade aus.

Zusammenfassend ist festzustellen, dass die messtechnische Analyse zum Strahlungswirkungsgrad gemäß DIN EN IEC 60675-3 gezeigt hat, dass der Flächenheizkörper mit dem chemischen Erzeugnis unabhängig von den eingesetzten Betriebsspannungen einen Strahlungswirkungsgrad von größer 40% hat. Mit zunehmender Betriebsspannung kann ein höherer Strahlungswirkungsgrad erzielt werden.

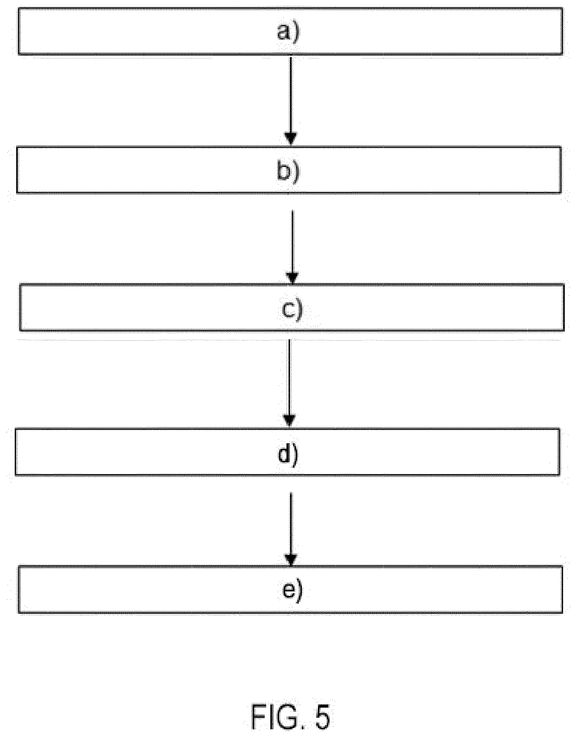

In Figur 5 ist das erfindungsgemäße Verfahren anhand eines Ablaufdiagramms veranschaulicht. Das Verfahren umfasst die folgenden Schritte:

a) Bereitstellen einer Suspension von Partikeln in einem flüssigen Medium, enthaltend Graphit, Graphen und eine oder mehrere Säuren,
b) erstes mechanisches Zerkleinern der Partikel der Suspension,
c) Stehenlassen der Suspension bis sich ein flüssiger Überstand absetzt und zumindest teilweises Entfernen des flüssigen Überstands,
d) Zugeben von Glaspulver und einem oder mehreren Alkalisilikaten zur Suspension,
e) zweites mechanisches Zerkleinern der Partikel der Suspension.

Der Wassergehalt des chemischen Produktes kann wahlfrei eingestellt werden, wobei es für die Anwendung des chemischen Produktes und dessen Verarbeitung vorteilhaft sein kann, wenn der Wassergehalt so eingestellt ist, dass es in Form einer pastösen oder festen Substanz vorliegt. Die Form, in der das chemische Produkt vorliegt, kann durch dessen Wassergehalt in einfacher Weise verändert werden, wobei durch eine Verminderung des Wassergehalts, insbesondere durch Trocknen, der Widerstand gegen Formänderung erhöht werden kann.

Im Sinne vorliegender Erfindung weisen Pasten einen sehr geringen Widerstand gegen Formänderung auf und sind zwar nicht fließfähig, aber streichfähig. Im Unterschied hierzu ist eine feste Substanz im Wesentlichen nicht plastisch verformbar. Wenn das chemische Produkt in Form einer Paste vorliegt, liegt der Anteil von Wasser vorzugsweise im Bereich von 10 bis 30 Gew.-%. Durch Trocknen kann die pastöse Substanz in eine Masse mit größerem Formänderungswiderstand, insbesondere auch in einen starren Feststoff, übergehen.

Aus obigen Ausführungen ergibt sich, dass die Erfindung ein neuartiges Verfahren zur Herstellung eines bislang nicht bekannten chemischen Erzeugnisses mit interessanten und sehr vorteilhaften Eigenschaften, insbesondere zur Verwendung als infrarotstrahlendes Heizmaterial für Flächenheizkörper, zur Verfügung stellt. Das chemische Erzeugnis kann durch Anwenden gängiger und fachüblicher Methoden und der Verwendung herkömmlicher, im Handel verfügbarer, Materialien hergestellt werden.

Bezugszeichenliste

1   chemisches Erzeugnis
2   Substrat
3   Oberfläche
4   Rand
5   Randstreifen
6   Elektrode
7   Klimakammer
8   Innenraum
9   Umgebungsfläche

100    Flächenheizkörper

**Patentansprüche**

1. Verfahren zur Herstellung eines chemischen Produkts, welches die folgenden Schritte umfasst:

   a) Bereitstellen einer Suspension von Partikeln in einem flüssigen Medium, enthaltend Graphit, Graphen und eine oder mehrere Säuren,
   b) erstes mechanisches Zerkleinern der Partikel der Suspension,
   c) Stehenlassen der Suspension bis sich ein flüssiger Überstand absetzt und zumindest teilweises Entfernen des flüssigen Überstands,
   d) Zugeben von Glaspulver und einem oder mehreren Alkalisilikaten zur Suspension,
   e) zweites mechanisches Zerkleinern der Partikel der Suspension.

2. Verfahren nach Anspruch 1, bei welchem die in Schritt e) erhaltene Suspension unter zumindest zeitweiligem Bewegen, insbesondere durch Rühren, gelagert wird, insbesondere für einen Zeitraum von 1 bis 3 Wochen.

3. Verfahren nach Anspruch 1 oder 2, bei welchem die in Schritt a) bereitgestellte Suspension einen oder mehrere Stabilisatoren enthält, insbesondere gewählt aus ionischen und nicht-ionischen Tensiden.

4. Verfahren nach einem der Ansprüche 1 bis 3, bei welchem vor, in oder nach Schritt d) zum wahlfreien Einstellen einer Konsistenz der Suspension der Gehalt an Flüssigkeit der Suspension erhöht wird.

5. Verfahren nach Anspruch 4, bei welchem zur Erhöhung des Wassergehalts der Suspension in Schritt d) das eine oder die mehreren Alkalisilikate in einer Lösung der Suspension zugegeben werden.

6. Verfahren nach einem der Ansprüche 1 bis 5, bei welchem zum Bereitstellen der Suspension in Schritt a) Graphit und Graphen in Pulverform gemischt werden, wodurch eine pulverige Graphit/Graphen-Mischung erhalten wird, und die pulverige Graphit/Graphen-Mischung in einem flüssigen Medium suspendiert wird, wodurch eine Graphit/Graphen-Suspension erhalten wird.

7. Verfahren nach einem der Ansprüche 1 bis 6, bei welchem

   i) bezogen auf die Gesamtmenge von Graphit und Graphen, ein relativer Gewichtsanteil von Graphit an der Gesamtmenge von Graphit und Graphen im Bereich von 60 bis 90 Gew.-% liegt und der Rest Graphen ist, und/oder
   ii) in Schritt a) zum Bereitstellen der Suspension, das Verhältnis der relativen Gewichtsanteile der Gesamtmenge von Graphit und Graphen zum flüssigen Medium im Bereich von 1:2 bis 1:3 liegt.

8. Verfahren nach einem der Ansprüche 1 bis 7, bei welchem Graphit in einer Kombination von Naturgraphit und künstlichem Graphit verwendet wird, wobei, bezogen auf die Gesamtmenge von Graphit, ein relativer Gewichtsanteil von Naturgraphit an der Gesamtmenge von Graphit im Bereich von 60 bis 90 Gew.-% liegt und der Rest künstlicher Graphit ist.

9. Verfahren nach einem der Ansprüche 3 bis 8, bei welchem in Schritt a) zum Bereitstellen der Suspension

   i) eine säurehaltige Lösung mit der einen oder den mehreren Säuren hergestellt wird, wobei die säurehaltige Lösung die mindestens eine Säure insbesondere in einem relativen Gewichtsanteil im Bereich von 5 bis 10 Gew.-% enthält,
   und/oder
   ii) eine stabilisatorhaltige Lösung mit dem einen oder den mehreren Stabilisatoren hergestellt wird, welche insbesondere mit der unter i) erhaltenen säurehaltigen Lösung gemischt wird, wobei die stabilisatorhaltige Lösung den mindestens einen Stabilisator insbesondere in einem relativen Gewichtsanteil im Bereich von 15 bis 30 Gew.-% enthält.

10. Verfahren nach Anspruch 9, bei welchem die säurehaltige Lösung und die stabilisatorhaltige Lösung hergestellt werden, wobei das Verhältnis des relativen Volumenanteils der Suspension zur Summe der relativen Volumenanteile der säurehaltigen Lösung und der stabilisatorhaltigen Lösung im Bereich von 2:1 bis 1:1 liegt.

11. Verfahren nach einem der Ansprüche 1 bis 10, bei welchem

i) in Schritt b) das erste mechanische Zerkleinern der Partikel der Suspension in einem Zeitraum von 20 Minuten bis 4 Stunden erfolgt, und/oder
ii) in Schritt b) bei dem ersten mechanischen Zerkleinern die Partikel der Suspension auf eine mittlere Partikelgröße im Bereich von 6 bis 20 $\mu$m mechanisch zerkleinert werden, und/oder
iii) die Suspension während des ersten mechanischen Zerkleinerns aktiv gekühlt wird, und/oder
iv) die erste mechanische Zerkleinerung in einer Rührwerkskugelmühle erfolgt, und/oder
v) in Schritt e) das zweite mechanische Zerkleinern der Partikel der Suspension in einem Zeitraum von 3 bis 8 Stunden erfolgt, und/oder
vi) in Schritt e) bei dem zweiten mechanischen Zerkleinern die Partikel der Suspension auf eine mittlere Partikelgröße im Bereich von 6 bis 20 $\mu$m mechanisch zerkleinert werden, und/oder
vii) die Suspension während des zweiten mechanischen Zerkleinerns aktiv gekühlt wird, und/oder
viii) die zweite mechanische Zerkleinerung in einer Rührwerkskugelmühle erfolgt.

12. Verfahren nach einem der Ansprüche 1 bis 11, bei welchem das in Schritt d) zugegebene Glaspulver

i) eine mittlere Korngröße im Bereich von 3 bis 20 $\mu$m aufweist, und/oder
ii in einer Menge zugegeben wird, dass es einen relativen Gewichtsanteil von 2 bis 10 Gew.-% pro kg Suspension hat, und/oder
iii aus Borsilikatglas hergestellt ist.

13. Verfahren nach einem der Ansprüche 1 bis 12, bei welchem das in Schritt d) zugegebene eine oder die mehreren Alkalisilikate,

i) Kaliumwasserglas und/oder Natriumwasserglas ist, und/oder
ii) ein relativer Gewichtsanteil des einen oder der mehreren Alkalisilikate in Summe 2 bis 8 Gew.-%, bezogen auf die Suspension, beträgt, und/oder
iii) das eine oder die mehreren Alkalisilikate in einer wässrigen Lösung der Suspension zugegeben werden, wobei ein relativer Gewichtsanteil des einen oder der mehreren wasserlöslichen Alkalisilikate in Summe 20 bis 60 Gew.-%, bezogen auf die wässrige Lösung, beträgt.

14. Verfahren nach einem der Ansprüche 1 bis 13, bei welchem

i) die Suspension vor Schritt c) einer Behandlung durch Ultraschall zur Verminderung einer mittleren Partikelgröße unterzogen wird, und/oder
ii) die Suspension nach Schritt e) einer Behandlung durch Hochdruckhomogenisation zum Homogenisieren der mittleren Partikelgröße unterzogen wird, und/oder
iii) die Suspension nach Schritt e) einer Zentrifugation zum Gewinnen eines Feststoffs unterzogen wird.

15. Chemisches Produkt, erhalten durch das Verfahren nach einem der Ansprüche 1 bis 14.

FIG. 1

FIG. 2

FIG. 3

FIG. 4

a)

b)

c)

d)

e)

FIG. 5

Europäisches
Patentamt

European
Patent Office

Office européen
des brevets

# EUROPÄISCHER RECHERCHENBERICHT

Nummer der Anmeldung

EP 23 16 9933

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | NANDHAKUMAR MANJUBAASHINI ET AL: "An enduring in vitro wound healing phase recipient by bioactive glass-graphene oxide nanocomposites", SCIENTIFIC REPORTS, Bd. 12, Nr. 1, 28. September 2022 (2022-09-28), XP093088834, DOI: 10.1038/s41598-022-20575-z Gefunden im Internet: URL:https://www.nature.com/articles/s41598-022-20575-z> * Absatz [materials] – Absatz * * Absatz [results] – Absatz [conclusion] * * Abbildungen 1-16 * ----- | 1-15 | INV. C01B32/19 C01B32/194 |
| X | PORWAL HARSHIT ET AL: "Tribological properties of silica-graphene nano-platelet compos", CERAMICS INTERNATIONAL, ELSEVIER, AMSTERDAM, NL, Bd. 40, Nr. 8, 15. April 2014 (2014-04-15) , Seiten 12067-12074, XP028862465, ISSN: 0272-8842, DOI: 10.1016/J.CERAMINT.2014.04.046 | 15 | |
| Y | * Absatz [experimental] – Absatz [conclusion] * * Abbildungen 1-5 * ----- -/-- | 1-14 | RECHERCHIERTE SACHGEBIETE (IPC) C01B |

Der vorliegende Recherchenbericht wurde für alle Patentansprüche erstellt

| Recherchenort | Abschlußdatum der Recherche | Prüfer |
|---|---|---|
| Den Haag | 9. Oktober 2023 | Marino, Emanuela |

EPO FORM 1503 03.82 (P04C03)

Seite 1 von 3

Europäisches
Patentamt

European
Patent Office

Office européen
des brevets

# EUROPÄISCHER RECHERCHENBERICHT

Nummer der Anmeldung

EP 23 16 9933

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Y.-H. CHU ET AL: "Synthesis of Nanoporous Graphite-Derived Carbon−Silica Composites by a Mechanochemical Intercalation Approach", LANGMUIR, Bd. 21, Nr. 6, 1. März 2005 (2005-03-01), Seiten 2545-2551, XP055648691, US ISSN: 0743-7463, DOI: 10.1021/la047983o | 15 | |
| Y | * Absatz [experimental] – Absatz [conclusion] * <br> * Abbildungen 1-8 * <br> ----- | 1-14 | |
| X | CASTARLENAS SONIA ET AL: "Few-layer graphene by assisted-exfoliation of graphite with layered silicate", CARBON, ELSEVIER OXFORD, GB, Bd. 73, 19. Februar 2014 (2014-02-19), Seiten 99-105, XP028836221, ISSN: 0008-6223, DOI: 10.1016/J.CARBON.2014.02.044 | 15 | |
| Y | * Absatz [experimental] – Absatz [conclusion] * <br> * Abbildungen 1-7 * <br> ----- | 1-14 | RECHERCHIERTE SACHGEBIETE (IPC) |
| X | US 2017/225233 A1 (ZHAMU ARUNA [US] ET AL) 10. August 2017 (2017-08-10) | 15 | |
| Y | * Absätze [0005] – [0135] * <br> * Beispiele 1-8 * <br> ----- <br> -/-- | 1-14 | |

Der vorliegende Recherchenbericht wurde für alle Patentansprüche erstellt

| Recherchenort | Abschlußdatum der Recherche | Prüfer |
|---|---|---|
| Den Haag | 9. Oktober 2023 | Marino, Emanuela |

Seite 2 von 3

# EP 4 455 088 A1

Europäisches Patentamt
European Patent Office
Office européen des brevets

## EUROPÄISCHER RECHERCHENBERICHT

Nummer der Anmeldung

EP 23 16 9933

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ANTONOV V E ET AL: "Multilayer graphane synthesized under high hydrogen pressure", CARBON, ELSEVIER OXFORD, GB, Bd. 100, 19. Dezember 2015 (2015-12-19), Seiten 465-473, XP029418387, ISSN: 0008-6223, DOI: 10.1016/J.CARBON.2015.12.051 | 15 | |
| Y | * Absatz [experimental] – Absatz [conclusion] * <br> * Tabellen 1-2 * <br> * Abbildungen 1-9 * <br> ----- | 1-14 | |
| X | HEATHER AU ET AL: "Thermal Decomposition of Ternary Sodium Graphite Intercalation Compounds", CHEMISTRY – A EUROPEAN JOURNAL, JOHN WILEY & SONS, INC, DE, Bd. 26, Nr. 29, 7. April 2020 (2020-04-07), Seiten 6545-6553, XP071881602, ISSN: 0947-6539, DOI: 10.1002/CHEM.202000422 | 15 | |
| Y | * Absatz [results] – Absatz [experimental] * <br> * Abbildungen 1-5 * <br> ----- | 1-14 | RECHERCHIERTE SACHGEBIETE (IPC) |
| X | YOON CHANG-MIN ET AL: "Fabrication of density-controlled graphene oxide-coated mesoporous silica spheres and their electrorheological activity", JOURNAL OF COLLOID AND INTERFACE SCIENCE, ACADEMIC PRESS,INC, US, Bd. 438, 8. Oktober 2014 (2014-10-08), Seiten 14-21, XP029094827, ISSN: 0021-9797, DOI: 10.1016/J.JCIS.2014.09.074 | 15 | |
| Y | * Absatz [materials] – Absatz [summary] * <br> * Abbildungen 1-9 * <br> ----- | 1-14 | |

Der vorliegende Recherchenbericht wurde für alle Patentansprüche erstellt

| Recherchenort | Abschlußdatum der Recherche | Prüfer |
|---|---|---|
| Den Haag | 9. Oktober 2023 | Marino, Emanuela |

**ANHANG ZUM EUROPÄISCHEN RECHERCHENBERICHT
ÜBER DIE EUROPÄISCHE PATENTANMELDUNG NR.**

EP 23 16 9933

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-10-2023

| Im Recherchenbericht angeführtes Patentdokument | Datum der Veröffentlichung | Mitglied(er) der Patentfamilie | Datum der Veröffentlichung |
|---|---|---|---|
| US 2017225233 A1 | 10-08-2017 | CN 108778994 A | 09-11-2018 |
| | | JP 6998879 B2 | 10-02-2022 |
| | | JP 2019506358 A | 07-03-2019 |
| | | KR 20180114093 A | 17-10-2018 |
| | | US 2017225233 A1 | 10-08-2017 |
| | | WO 2017139078 A1 | 17-08-2017 |

Für nähere Einzelheiten zu diesem Anhang : siehe Amtsblatt des Europäischen Patentamts, Nr.12/82

EPO FORM P0461